# EUROPEAN PATENT APPLICATION

(11) **EP 0 660 077 A2**
(43) Date of publication of application: **28.06.1995**
(21) Application number: 94309599.2
(22) Date of filing: 20.12.1994
(51) Int. Cl.: G01B 11/06

(54) **Method of determining thickness of a coating**

(30) Priority: 23.12.1993 GB 9326247
(71) Applicant: THE BRITISH PETROLEUM COMPANY P.L.C., London EC2M 7BA (GB)
(72) Inventor: Taylor, Spencer Edwin, Sunbury-on-Thames, Middlesex TW16 7LN (GB)
(74) Representative: Preece, Michael

(57) **Abstract**

A method for determining the thickness of a coating on a coated substrate which comprises
(a) providing an incident light,
(b) polarising the incident light,
(c) exposing the coated substrate to the polarised incident light such that the light is reflected from the substrate,
(d) detecting and measuring the state of polarisation of the reflected light ; and
(e) analysing the results obtained from step (d).

## Description

The present invention relates to a method of determining the thickness of a coating, in particular the thickness of aviation fuel coatings.

The oxidation stability of aviation fuels is rated according to a standard procedure known as the "Jet Fuel Thermal Oxidation Test" (JFTOT). In this test, the fuel under observation is brought into contact with a standard heated metal tube under limited oxygen. Deposits are formed on the surface of the tube and assessment of the deposit-forming tendency of the fuel at a given temperature is determined by visual comparison of the colour of the deposit with colour standards (ASTM D3241) and by pressure increases across a standard in-line filter. Visual ratings ranging from 1 (little deposit) through to 4 (heavy deposit) are then assigned to the particular fuel.

Whilst the above approach provides an insight into the oxidative stability, it does not provide information relating to the most fundamental properties of the deposits, namely thickness and volume. Armed with such information, it would be possible to build up an improved picture of thermal degradation mechanisms as related to the JFTOT through the combination of film thickness with deposit compositional information.

Attempts have been made to correlate the assigned ratings from the JFTOT to deposit thickness but these have only allowed, at best, semiquantitative comparisons between fuels. Alternative methods have also been adopted which include the development of the Tube Deposit Rater (TDR) which relies on the reflection of white light from the surface of the tube. The reflected light is detected using a photocell. Whilst being less subjective than the visual assessment, the TDR method is sensitive to the optical properties of the deposited film.

Further studies on the quantification of tube deposits have involved combustion of the deposit to C0₂ and Auger spectroscopy but these techniques are destructive. SEM/EDX and light interferometry have also been utilised but both suffer from the limitation of a minimum film thickness.

US Patent 5293218 discloses a method for determining the amount of residue of jet fuel as a film on JFTOT tubes. The method requires the use of interferometry where the tube is contacted with a light. The degree of reflected light from the tube is measured and correlated with coating thickness. Whilst interferometric determination provides a sensitive tool for thick films such as 70 microns or more, this method cannot be used to determine coatings of less than 70 microns.

We have now developed a method for determining the deposit thickness on JFTOT tubes which is non-destructive, is not limited by the thickness of the deposit and makes use of ellipsometry. Oxidation stability and thickness of the deposit may be evaluated thus allowing for considerably greater and more precise evaluation of the quality of the fuel.

Accordingly, the present invention provides a method for determining the thickness of a coating on a coated substrate which comprises:
(a) providing an incident light,
(b) polarising the incident light
(c) exposing the coated substrate to the polarised incident light such that the incident light is reflected from the substrate
(d) detecting and measuring the state of polarisation of the reflected light; and
(e) analysing the results obtained in step (d).

The present invention provides a non-destructive, sensitive method of determining the thickness of a deposit or coating on a substrate and is especially applicable to the determination of the thickness of aviation fuel on standard JFTOT tubes.

The method of the present invention uses ellipsometry and according to a further aspect of the present invention there is provided a device for measuring the thickness of a coating on a coated substrate which comprises:
(a) a source of light
(b) means for polarising the source of light
(c) means for detecting the reflected polarised light from the substrate
(d) means for measuring the reflected polarised light; and
(e) means for computing the thickness of the coating.

The method of the present invention is not limited by the thickness of the coating on the substrate. Suitably, coatings having a thickness of from 0 to 600nm can be determined, preferably 0 to 250nm, especially 0 to 70nm.

The coated substrate is exposed to an incident light. Suitably, the light is monochromatic and may be obtained from a laser source. Suitably, the light may have a wavelength of from 500-1000nm, preferably 600-800, especially 600-750nm. The preferred laser source is a HeNe laser emitting light at a wavelength of 632.8 nm. It is preferred that the laser is inclined at an angle to the vertical. Suitably, the angle is from 50 to 70Q.

The light is polarised prior to contact with the coated sample. Any suitable polarising filter well known to the person skilled in the art may be used for this purpose. It is preferred that as part of the polarising procedure, the incident beam is also passed through a quarterwave plate. Again, such plates will be well known in the art.

The incident light beam is made to contact with the coated substrate which may be accommodated in a suitable compartment. The sample compartment may be adjustably mounted such that movement of the sample may be carried out to allow the sample to be positioned in the exact plane of the incident beam. The sample compartment may suitably be adjusted in both vertical and horizontal directions.

The incident polarised beam is reflected from the coated substrate. The reflected polarised light is detected and measured. Suitably, the reflected light is directed to an optical system which may comprise an analyser and a detector. It is preferred, although not essential, to use a constantly rotating analyser. Preferably, the analyser and detector are mounted on the same plane and held at the same angle to the vertical as the laser source and the polarising equipment.

The data obtained from the detector and analyser may suitably be analysed using appropriate computer software to enable calculation of the coating thickness. Such software is commercially available and will be well known to the person skilled in the art.

It is preferred that a series of measurements be carried out along the surface of the coated substrate to provide an overall picture of the thickness of the coating. Suitably the sample position may be adjusted at the end of each procedure. Suitably, the sample may be moved from between 10 and 200 microns, preferably from 20 to 150 microns. This procedure may be repeated until substantially all of the surface of the coated substrate has been analysed.

If desired, a standardisation procedure may be adopted prior to analysis of a coated substrate. Suitably, coated substrates using organic films produced from fatty acids and their heavy metal salt or any water-insoluble material may be used. Such layers may be produced using the Langmuir-Blodgett film deposition technique. Suitably, 5 to 151, preferably from 15 to 61 monolayers may be deposited and analysed according to the present invention. It is preferred that the substrates coated in this way are coated with "stepped" Langmuir-Blodgett layers to enable a range of known film thickness measurements to be made.

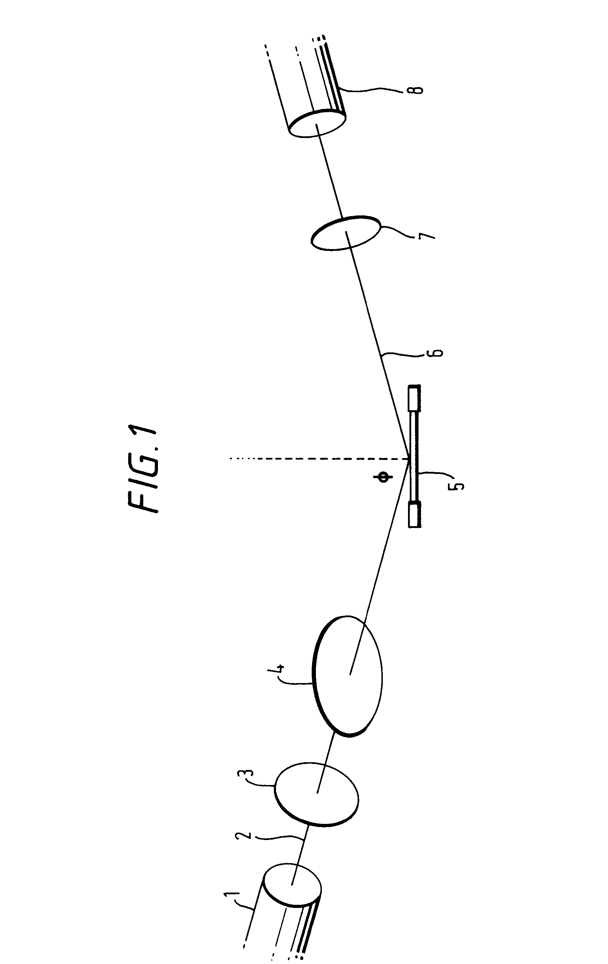

The invention will now be described by way of example with reference to Figure 1 and the following examples.

A laser (1) inclined at an angle of between 50 and 70Q to the vertical emits a beam (2) which is passed through a polarising filter (3) and a quarterwave plate (4) before impinging on the coated sample (5) which is able to move in the direction of the laser beam allowing profiling of the tube surface. On contact with the surface of the sample, the polarised incident beam (2) is reflected. The reflected polarised beam (6) is analysed by an optical system comprising a detector (7) and an analyser (8) mounted on the same plane and held at the same angle to the vertical as the laser (1), the polarising filter (3) and the quarterwave plate (4).

In use, the sample (5) is placed in a sample compartment. The polarised incident beam (2) impinges on the coated sample (5) at a given position, eg at one end. The reflected polarised light (6) is passed into the detector (7) and analyser (8) and the data computed using a computer. The computer also controls the sample position which may be adjusted by a small distance determined by the resolution of the polarised incident light beam (2). The light reflected from the new position is data logged and the process repeated over the length of the sample until the full region has been profiled. The refractive index and film thickness are then calculated using computer software purchased from Plasmos and identified as Plasmos SDENG 3.67.

### Example 1 Preparation of Standard Coated Tubes

A model coated tube was prepared in the following way:-A monolayer of behenic acid (docosanoic acid, CH₃(CH₂)₂₀COOH) received from Hull University was spread on an aqueous subphase in a Langmuir trough. The subphase contained 0.125 g/i CdC1₂.2.5H₂0 to assist monolayer deposition and 0.53 g/i NH₄CI to buffer the pH to approximately 5.7. Accurate control of the state of the monolayer was achieved by maintaining a constant surface pressure during deposition. Surface pressure was monitored using a filter paper Wilhelmy plate. The tube was moved longitudinally into and out of the aqueous subphase through the air-water interface at a controlled rate of between 0.5 and 2.5mm/minute. In order to control the deposition, the tube was initally immersed to the maximum depth before spreading a certain amount of the film material on the surface of the water from a suitable spreading solvent which was 40 f..ll of a solution containing 0.35 mg behenic acid dissolved in 10 ml of chloroform. The vertical position of the tube in the subphase was controlled by a computer, allowing close monitoring of the deposition process.

The above procedure was repeated to provide three coated tubes containing 2, 9 and 10 cadmium behenate multilayers containing from 11 to 145 monomolecular films.

### Example 2 Determination of Layer Thickness

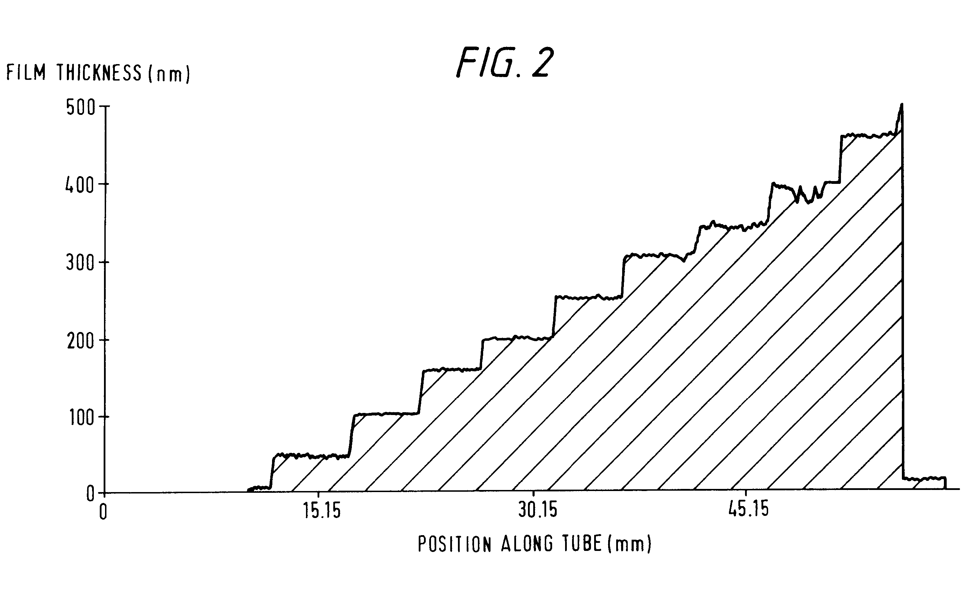

To confirm sensitivity and accuracy of the ellipso- metric analysis, the coated tubes prepared according to Example 1 were placed in the sample compartment and a monochromatic light of 632.8 nm wavelength from a HeNe laser was made to impinge on the sample at one end. The incident beam was reflected from the sample surface and the state of polarisation of the reflected beam analysed by a constantly rotating analyser. The information was fed into the purpose built software to allow computation of the refractive index and film thickness (Plasmos SDENG 3.67). The procedure was repeated along the length of the sample. The profiles obtained from each sample are given in Figure 2. The profiles obtained indicate coating thicknesses in agreement with that determined during the preparation.

### Example 3 Determination of Fuel Layer Thickness

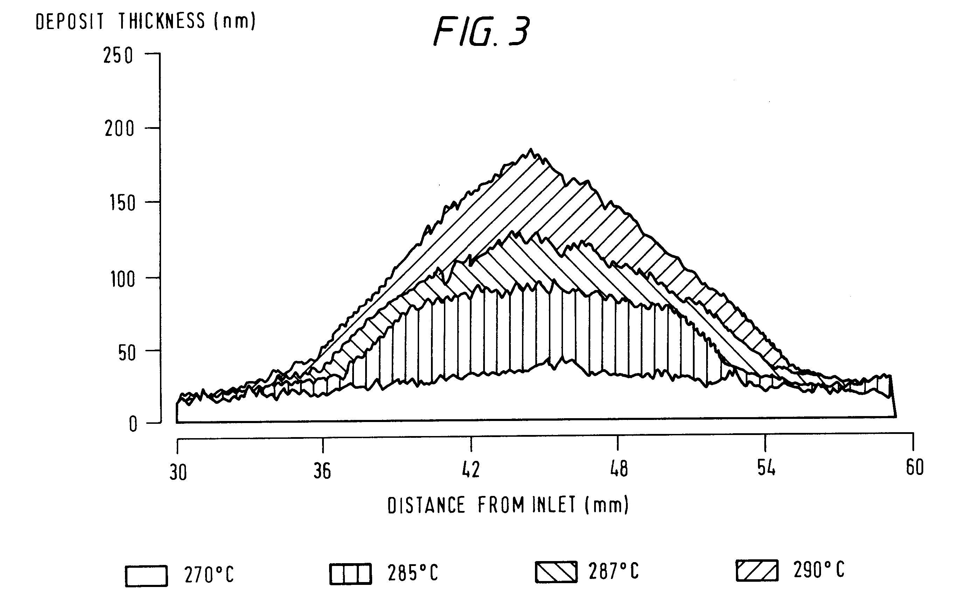

The procedure of Example 2 was repeated to determine the deposit film thickness profiles of a series of JFTOT tubes produced from a Merox fuel thermally stressed at a number of different temperatures ranging from 270 to 290°C. It can be seen from Figure 3 that the tube subjected to the highest temperature has the thickest deposit.

### Example 4 Determination of Fuel Layer Thickness

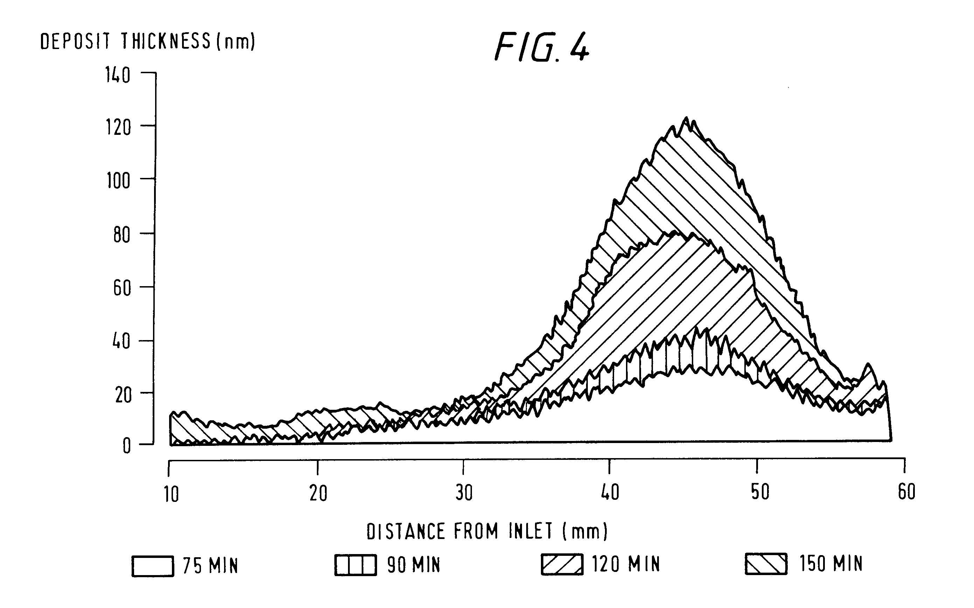

The procedure of Example 3 was repeated to determine the deposit film thickness profiles of a series of JFTOT tubes produced from a Merox fuel run at different run times ranging from 75 to 150 minutes. It can be seen from Figure 4 that the coating thickness ranges from 20 to 120nm.

## Claims

1. A method for determining the thickness of a coating on a coated substrate which comprises
(a) providing an incident light,
(b) polarising the incident light,
(c) exposing the coated substrate to the polarised incident light such that the light is reflected from the substrate,
(d) detecting and measuring the degree of polarisation of the reflected light; and
(e) analysing the results obtained from step
(d).

2. A method as claimed in claim 1 wherein the incident light is produced by a laser source.

3. A method as claimed in claim 1 or claim 2 in which the incident light has a wavelength of from 500 to 1000nm.

4. A method as claimed in any one of claims 1 to 3 in which the results obtained from step (d) are analysed using computer software.

5. A method as claimed in any one of claims 1 to 4 in which the thickness of the coating is from 0 to 600nm.

6. A method as claimed in any one of claims 1 to 5 in which the coated substrate is a JFTOT tube and the coating is aviation fuel.

7. A device for measuring the thickness of a coating on a coated substrate as claimed in any one of claims 1 to 6 which comprises:
(a) a source of light
(b) means for polarising the source of light
(c) means for detecting the reflected polarised light from the substrate
(d) means for measuring the reflected polarised light, and
(e) means for computing the thickness of the coating.
